# EUROPEAN PATENT APPLICATION

(11) **EP 1 834 835 A1**
(43) Date of publication of application: **19.09.2007**
(21) Application number: 06005554.8
(22) Date of filing: 17.03.2006
(51) Int. Cl.: B60N 2/68, B60N 2/70, B60N 2/72

(54) **Seat member**

(71) Applicant: L&P Swiss Holding Company, 9303 Wittenbach (CH)
(72) Inventor: Lootens, Luc, 87616 Marktoberdorf (DE); Samain, Maxime, 8760 Meulebeke (BE)
(74) Representative: Banzer, Hans-Jörg

(57) **Abstract**

A seat member (25) comprises a seat component, e.g., a seat pan (26), formed of a plastic material, such as reinforced polyamide, and defining a recess in which a suspension (28) is disposed that may be formed of a wire pad or an elastic body.

## Description

The present invention relates to a seat member of a seat, in particular to a seat member of a vehicle seat.

Conventional seats, in particular seats used in vehicles, comprise a seat pan formed of metal parts that are welded together, and foam, trim and other components of the vehicle seat are attached to the metal seat pan. Frequently, the metal seat pan defines a central opening which is spanned by a plurality of wires forming a suspension assembly, which, in use, is arranged below the foam of the seat and, by virtue of its elastic properties, provides increased comfort to a person sitting on the seat.

In order to meet the design, attachment and stability requirements imposed on vehicle seats and their components, metal seat pans are frequently constructed of a large number - occasionally in excess of 20 - of components that need to be welded together. This conventional seat pan design gives rise to several problems. Firstly, due to the large weight of the metal components and the stability requirements imposed on the seat pan, metal seat pans are typically comparatively heavy, their weight frequently exceeding 3 kg. Secondly, since a large number of secondary welding operations is required for producing the metal seat pan, which welding operations increase production costs, the total cost for producing metal seat pans is often high. While the weight of metal seat pans is reduced if some of their constituent components are formed of lightweight metals, such as aluminum or magnesium, this solution further increases production costs. Similar problems exist for conventional seat backrests.

Therefore, it is an object of the present invention to provide improved seat members. In particular, it is an object to provide seat members, in particular for vehicle seats, which overcome the problems of the prior described above and provide sitting comfort for a person sitting on a seat comprising the seat member.

According to the present invention, this object is achieved by a seat member according to claim 1, a seat according to claim 18, and a method for producing a seat according to claim 19. The dependent claims define preferred or advantageous embodiments.

A seat member according to the present invention comprises a seat component having a frame portion and a recess defined within the frame portion, which seat component is formed of a plastic material. In the seat member, a suspension is at least partially disposed within the recess, the suspension being deformable upon exertion of a force directed perpendicularly to a plane defined by said frame of said seat component. Since, in the seat member according to the present invention, the seat component is formed of a plastic material and an elastic suspension is arranged on the seat component, the seat member of the present invention combines the benefits of a light-weight, rigid plastic seat component having arranged thereon a suspension that provides comfort for a person sitting on a seat.

In one embodiment, the suspension comprises a wire pad attached to the frame portion of the seat component. Preferably, the wire pad is formed of overmoulded formed wires. For attaching the wire pad on the frame portion, a plurality of hooks may be attached to a periphery of the wire pad, e.g., to wire ends, and/or may be integrally formed with the wire pad periphery, and engagement recesses may be formed in the frame portion of the seat component for hooking engagement with the hooks. The seat member may also be designed such that, at least for a subset of wires, only one end of the wires is fixedly attached to the frame portion, while the other end is coupled to an actuator that allows a tension of the wires to be adjusted for adjusting the elastic properties of the suspension. A subset of wires, which extend in parallel, may also be formed into an undulated shape for adjusting the elastic properties of the suspension. Still further, an extended overmoulded wire pad may be formed that serves as suspension. In this case, the material used for overmoulding the wire pad may also, at least partially, extend into the space in between the wires.

In another embodiment, the suspension comprises an elastic body formed of a plastic material and at least partially disposed within the recess. Preferably, the material of the elastic body is chosen such that the elastic body has an elastic modulus which is smaller than the elastic modulus of the frame portion of the seat component. In this embodiment, the seat component and the elastic body may be integrally formed, thus further simplifying assembly of the seat.

The seat component may be a seat pan or the frame of a seat back.

The plastic material of which the seat component is formed may be a reinforced polyamide. In a preferred embodiment, the plastic material is a glass-fibre reinforced polyamide. The polyamide may be a reinforced polyamide 6 or a reinforced polyamide 66. In particular, the plastic material may be Ultramid®.

The seat component may be formed by injection moulding or any other suitable moulding process. If the suspension is formed of an elastic body of plastic material, the seat component and the suspension may be integrally formed by two-component moulding.

A seat according to the present invention comprises a seat member according to any one aspect or embodiment of the invention, foam of a seat cushion or of a seat backrest of the seat being arranged over said seat member.

In a method for producing a seat member according to the present invention, a seat component, which is formed of a plastic material and comprises a frame portion and a recess defined within the frame portion, and an elastic body are formed in a two-component moulding process, such that the elastic body is at least partially disposed in the recess. Preferably, the elastic body is formed of a plastic material having an elastic modulus smaller than the elastic modulus of the seat component material. In a preferred embodiment, the plastic material of the seat component is a glass-fibre reinforced polyamide.

The present invention combines the advantages of a light-weight seat component that requires no or only little secondary processing operations before installation in a seat with the added comfort provided to a person sitting on a seat by a suspension.

While it is anticipated that the main field of application of the present invention will be vehicle seats, the present invention is not restricted thereto but may be applied to arbitrary seats with equal facility.

Preferred embodiments of the present invention will be described with reference to the accompanying drawing.

Figure 1 is a schematic partial representation of a seat according to an embodiment of the present invention.

Figure 2 is a schematic representation of a seat component according to a first embodiment of the present invention.

Figure 3 is a schematic representation of a seat component according to a second embodiment of the present invention.

Figure 4 is a cross-sectional view of the seat component of Figure 3 along line IV-IV in Figure 3.

Figure 5 is a cross-sectional view of a seat component according to a third embodiment of the present invention.

Figure 6 is a schematic representation of a seat component according to a fourth embodiment of the present invention.

Figure 7 is a schematic representation of a seat component according to a fifth embodiment of the present invention.

Figure 8 is a cross-sectional view of the seat component of Figure 7 along line VIII-VIII in Figure 7.

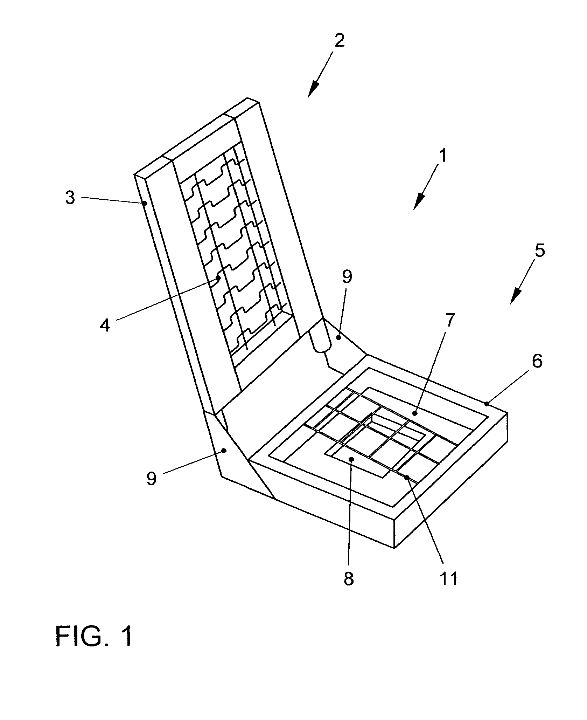

Figure 1 is a schematic partial representation of a seat 1 according to an embodiment of the present invention which comprises a seat back portion 2 and a seat pan portion 5, the seat back portion 2 being pivotably attached to the seat pan portion 5 by means of a joint 9 which is only schematically indicated. The seat back portion 2 comprises a frame 3 and a suspension 4 formed of a plurality of wires extending in longitudinal and transverse directions relative to the seat back. As is schematically indicated, the wires extending in a transverse direction have an undulated form. The seat pan portion 5 comprises a seat pan 6 having a frame portion and a recess 7 defined therein. In the particular example shown, an opening 8 is formed within the recess 7. A plurality of wires forming a wire pad 11, which is only schematically indicated in Figure 1 but will be explained in more detail below, extend across the recess 7. In use, the foam or cushioning of the seat backrest or the seat cushion are arranged on top of the seat back portion and the seat pan portion, respectively, such as to contact the respective wire pads or suspensions 4 and 11.

Importantly, according to the present invention, the frame 3 of the seat back and the seat pan 6 are formed of a plastic material, preferably Ultramid® or any reinforced polyamide, such that the weight of the corresponding portion of the seat is reduced compared to conventional designs, while the extended wire pad integrated with the seat component ensures good sitting comfort. The seat pan 6 of a plastic material may be produced using a moulding process, e.g., injection moulding.

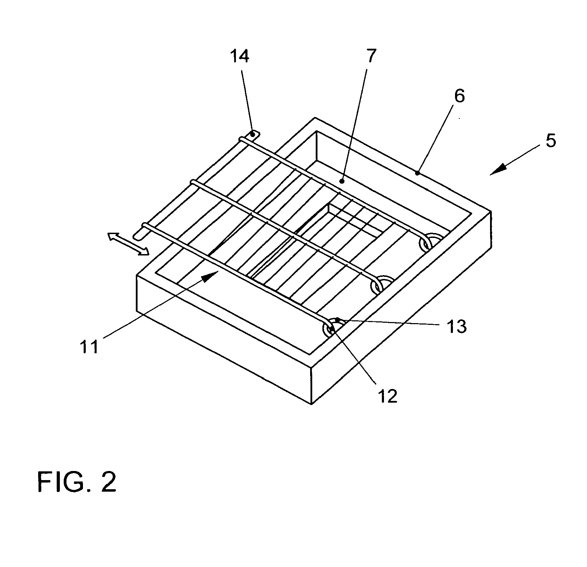

Next, with reference to Figures 2-6, preferred embodiments of the seat members 2, 5 will be described in detail. While this description is mainly with reference to the seat pan portion, it is to be understood that the various embodiments are equally applicable to the seat back portion.

Figure 2 is a schematic representation of the seat pan portion 5 of Figure 1. The seat pan 6 has a frame portion defining therein the recess 7. On the frame portion, ears 13 are provided for hooking engagement with hooks 12 that extend from the wire pad 11. In the embodiment shown, the wire pad comprises several wires extending in a longitudinal direction along the seat pan, intersected by a plurality of transverse wires which extend between the longitudinal wires. Typically, the longitudinal and transverse wires may be designed such as to have different thickness and/or may be formed of different materials, and my thus have different elastic properties. Further, in the illustrated embodiment, only one end of the longitudinal wires is provided with hooks 12, while the other end is connected to a movable member 14 by means of which a tension of the longitudinal wires may be adjusted such as to modify the elastic properties of the wire pad 11. The movable member 14 may, in turn, be coupled to a lever, a handwheel or an electromotor employed for moving the member 14. Preferably, the wires forming the wire pad or, at least, a subset of these wires, are overmoulded wires or wires coated with a plastic material. Several variants of this design are conceivable. For example, the wire pad may be fixedly attached to the frame portion of the seat pan on at least two opposing edges of the wire pad, i.e., no movable member 14 is employed. In particular, the wire pad may also be fixedly attached to the frame portion at all four edges using hooks and corresponding engagement means provided on the frame portion of the seat pan. Further, other suitable methods for attaching the wire pad to the seat pan may also be employed.

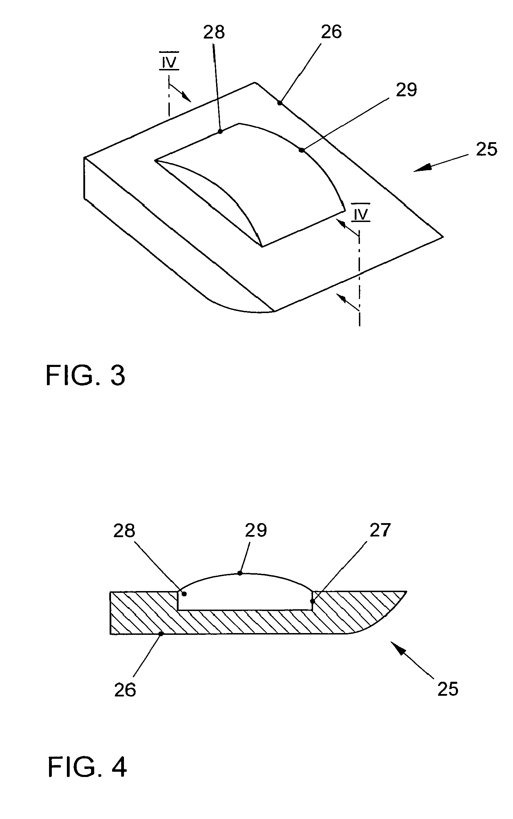

Figures 3 and 4 show an alternative embodiment of a seat pan portion 25 comprising a seat pan 26 which, again, defines an internal recess in which a suspension is disposed. In the present embodiment, the suspension is formed of an elastic body 28 of a plastic material that is inserted into the recess 27 formed in the seat pan 26. The elastic body 28 may protrude from a seat pan top surface, as schematically indicated at the protrusion 29. The plastic material of the elastic body 28 as well as its construction is chosen such as to ensure that, upon exertion of a force in a vertical direction relative to the seat pan top surface, the elastic modulus of the elastic body 28 is smaller than the one of the seat pan 26, such that the elastic body 28 acts as suspension. Since both the elastic body 28 and the seat pan 26 are formed of a plastic material, albeit, typically, the respective plastic materials used for the elastic body and the seat pan are different, the seat pan portion 25 shown in Figures 3 and 4 may be formed using a two-component moulding. For example, the seat pan 26 may be formed first and, subsequently, is overmoulded with a different plastic material for forming the elastic body 28. In this way, the seat pan 26 and the suspension may be integrally formed.

The elastic body 28 may be formed of any suitable material, e.g., of a glass- or carbon-fibre reinforced polyamide or polypropylene, as long as the elastic modulus of the elastic body 28 remains smaller than the elastic modulus of the surrounding frame portion of the seat pan.

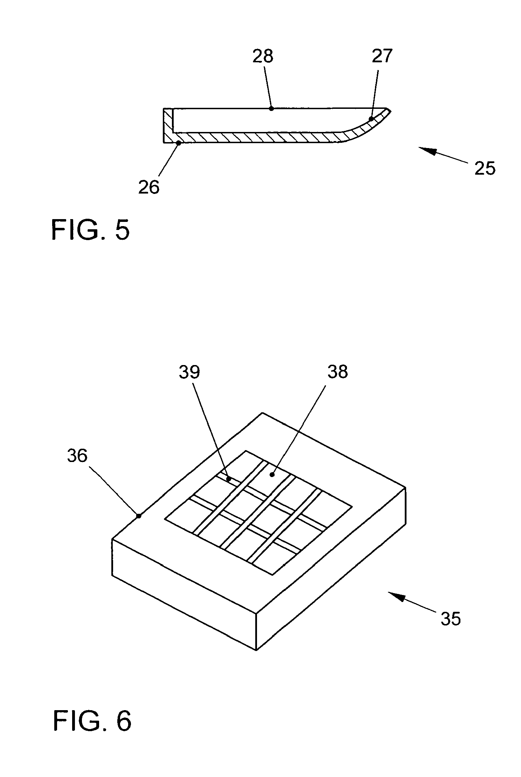

Figure 5 shows a variant of the embodiment of Figures 3 and 4 which differs from the latter mainly in that the elastic body 28 does not protrude from the seat pan top surface. Naturally, several other variants of the embodiments shown in Figures 3-5 are conceivable. For example, the elastic body 28 forming the suspension may also be formed of the same material as the seat pan 26, while its elastic properties are suitably adjusted by appropriately shaping the elastic body 28.

The suspension designs of Figure 2 and of Figures 3-5 may also be intercombined in a way that, as schematically illustrated in Figure 6, in a seat pan portion 35, grooves 39 are formed in a top surface of an elastic body 38 inserted into a seat pan recess and are designed to receive wires of a wire pad (not shown). In this embodiment, the wire pad is overlaid onto the elastic body 38, portions of plastic material of the elastic body 38 protruding in between the wires, which further increases sitting comfort.

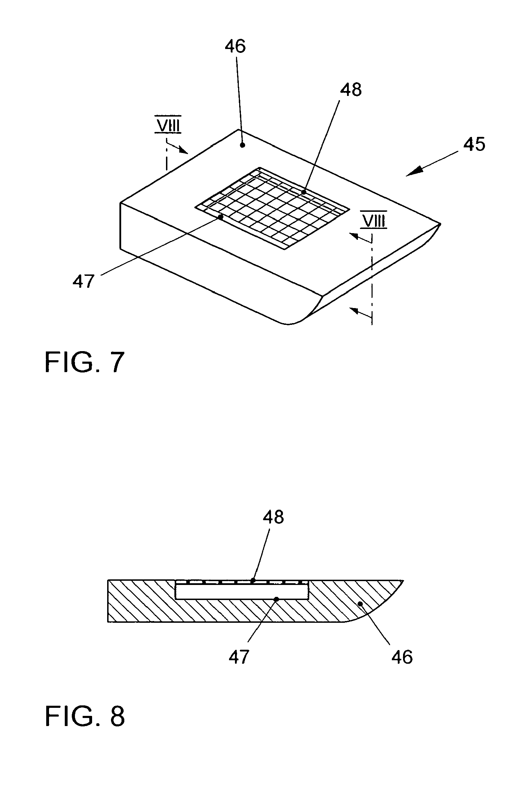

Figures 7 and 8 schematically indicate a seat pan portion 45 in which an elastic body and a wire pad are also intercombined into a suspension 48. In the embodiment shown, a wire pad is overmoulded with a plastic material, such as to form a suspension having a central wire pad portion surrounded by a shell of a plastic material, the suspension 48 being disposed to extend across the recess 47 formed in the seat pan 46. Since the suspension 48 has a shell of plastic material, it may be attached to the seat pan 46 not only using mechanical means, such as hooks, but also by fusing the suspension 48 and the seat pan 46 at a peripheral portion of the suspension 48, e.g., using ultrasonic welding.

In any one of the embodiments indicated above, the seat pan, and, analogously, the frame of the seat back, may be formed of any suitable plastic material, in particular, of glass-fibre reinforced polyamide, of Ultramid®, or of any other similar material.

In conclusion, the present invention provides seat members comprising a seat component, such as a seat pan or a seat back frame, of a plastic material and a suspension, which seat members provide the combined benefits of a light-weight structure and good sitting comfort.

## Claims

1. Seat member, comprising
a seat component (3, 6; 26; 36; 46) comprising a frame portion and a recess (7; 27; 47) defined within the frame portion, wherein the seat component (3, 6) is formed of a plastic material, and
wherein a suspension (4, 11; 28; 38; 48) is at least partially disposed within said recess (7; 27; 47), the suspension (4, 11; 28; 38; 48) being deformable upon exertion of a force directed perpendicularly to a plane defined by said frame of said seat component (3, 6; 26; 36; 36).

2. Seat member according to claim 1,
**characterized in that**
said suspension comprises a wire pad (4, 11; 48) attached to said frame portion of said seat component (3, 6).

3. Seat member according to claim 2,
**characterized in that**
said wire pad (4, 11; 48) comprises overmoulded wires formed into said wire pad.

4. Seat member according to claim 2 or claim 3,
**characterized by**
a plurality of hooks (12) attached to or integrally formed with a periphery of said wire pad (11) and
engagement portions (13) formed in said frame portion of the seat component (6) for hooking engagement with said hooks (12).

5. Seat member according to any one of claims 2-4,
**characterized in that**,
at least for a subset of wires of said wire pad, a tension of each one of the wires contained in said subset is adjustable for adjusting the elastic properties of said wire pad (11).

6. Seat member according to any one of claims 2-5,
**characterized in that**
at least for a further subset of wires of said wire pad, which extend essentially parallel, each one of the wires contained in said further subset has an undulated shape.

7. Seat member according to any one of claims 2-5,
**characterized in that**
gaps between wires of said wire pad are filled with a plastic material (38; 48).

8. Seat member according to any one of the preceding claims,
**characterized in that**
said suspension comprises an elastic body (28; 38; 48) formed of a plastic material.

9. Seat member according to claim 8,
**characterized in that**
said elastic body (28; 38; 48) has an elastic modulus which is smaller than the elastic modulus of said frame portion of said seat component (6; 26; 36; 46).

10. Seat member according to any one of claims 1-9,
**characterized in that**
said seat component is a seat pan (6; 26; 36; 46).

11. Seat member according to any one of claims 1-9,
**characterized in that**
said seat component is a seat back (3).

12. Seat member according to any one of claims 1-11,
**characterized in that**
said seat component is formed of a glass-fibre reinforced polyamide.

13. Seat member according to claim 12,
**characterized in that**
said reinforced polyamide is selected from reinforced polyamide 6 or reinforced polyamide 66.

14. Seat member according to any one of claims 1-11,
**characterized in that**
said seat component is formed of Ultramid®.

15. Seat member according to any one of claims 1-14,
**characterized in that**
said seat component is formed by injection moulding.

16. Seat member according to any one of claims 1-15,
**characterized in that**
said seat component (26; 36) and said suspension (28; 38) are integrally formed by two-component moulding.

17. Seat member according to any one of claims 1-16,
**characterized in that**
said recess (7) comprises a through opening (8) formed in said seat component (3; 6).

18. Seat, comprising
a seat member according to any one of claims 1-17,
wherein foam of a seat cushion or of a seat backrest of the seat is arranged to contact said seat member.

19. Method for producing a seat member, wherein a seat component (26; 36), which is formed of a plastic material and comprises a frame portion and a recess defined within the frame portion, and an elastic body (28; 38) are formed in a two-component moulding process, such that the elastic body (28; 38) is at least partially disposed in said recess.

20. Method according to claim 19,
wherein said elastic body (28; 38) is formed of a plastic material having an elastic modulus smaller than the elastic modulus of the seat component material.

21. Method according to claim 19 or claim 20,
**characterized in that**
said plastic material of said seat component is a glass-fibre reinforced polyamide.
